# EUROPEAN PATENT SPECIFICATION

(11) **EP 0 692 169 B1**
(45) Date of publication and mention of the grant of the patent: **02.07.2003**
(21) Application number: 94912925.8
(22) Date of filing: 01.04.1994
(51) Int. Cl.: H04M 1/00, H04R 25/00, H04R 1/10, H04R 1/46

(54) **UNIDIRECTIONAL EAR MICROPHONE WITH MULTIPLE OPENINGS**
UNIDIREKTIONALES OHRMIKROFON MIT MEHREREN ÖFFNUNGEN
MICROPHONE D'OREILLE UNIDIRECTIONNEL A ORIFICES MULTIPLES

(30) Priority: 02.04.1993 US 42246
(43) Date of publication of application: 17.01.1996
(73) Proprietor: JABRA CORPORATION, San Diego, CA 92122 (US)
(72) Inventor: NORRIS, Elwood, G., Poway, CA 92064 (US); McCLENDON, Charles, L., San Diego, CA 92129 (US)
(74) Representative: Grünecker, Kinkeldey, Stockmair & Schwanhäusser Anwaltssozietät
(86) International application number: US9403574
(87) International publication number: WO94023520

(56) References cited:
- EP-A- 0 493 361
- WO-A-93/23942
- US-A- 3 197 576
- US-A- 4 051 330
- US-A- 4 463 222
- US-A- 4 860 342
- US-A- 4 930 156

## Description

### 1. Field of the Invention

This invention pertains to a microphone/speaker combination which picks up speech vibrations on a unidirectional basis and develops an isolated signal for audio processing which deletes background audio signal. More particularly, the present invention relates to an ear mounted microphone/speaker combination responsive to speech from the user which is substantially isolated from surrounding background noise and which can be used in duplex without occurrence of feedback.

### 2. Prior Art

The emergence of computer based control systems for virtually every aspect of daily living has re-emphasized the need for an inexpensive system for providing direct voice command capability. At present, most computer systems rely on keyboard input to provide data and processing instructions. This is not only time consuming and limiting in view of physical requirements of being seated with both hands on a key pad, but it limits the efficiency of data input to the typing speed of the user. Indeed, compared with the advanced degree of sophistication of current computer systems, this dominant data entry method of imputing instructions one letter or number at a time seems almost archaic.

This is not to say that the development of voice activated input systems has been ignored. There has clearly been a long recognized need for implementation of a method of voice command which would obviate the keyboard as a computer input device. Numerous problems have remained unsolved, however, and continue to place voice activated systems beyond the financial reach of the general marketplace. For example, the typical level of confidence in voice recognition for commercial software is between 45 to 60%. At this rate, the system is averaging only one out of two words with correct identification. This is hardly adequate for general application. This confidence level is even less when environmental factors are introduced such as background noise, mobility of the user and other unpredictable variables that modify the audio signal being received at the computer.

In typical applications for voice activated systems, one might expect a telephone to ring during dictation, an interruption to occur by another voice having a different voice pattern, the sounding of a horn, clock alarm, or any of thousands of extraneous background noises. Even the shifting of position of the speaking individual can modify the audio signal enough to confuse the computer recognition of sounds. The speaker may simply turn her head to a different direction and create enough variation to thwart voice recognition.

Resolution of these anomalies must be accomplished before voice command systems can be of general use. Current efforts have focused on generation of complex algorithms which sift through the maze of audio signal and attempt to classify and discard background noise. Obviously, it is impossible to completely predict and program every potential superfluous signal that may eventually be detected. Voice variations by the user are even more challenging, because the occurrence of a cold, sinus problems, and variations in voice orientation to the microphone are extremely difficult to classify or quantify. As a consequence, voice command systems are marginal in overall performance and are extremely expensive.

Undoubtedly, part of the problem of voice recognition arises because of the use of conventional microphones as the media for processing voice signals. Voice recognition obviously requires conversion of the audio input to digital or analog signal. Generally, a digital conversion is necessary before comparison with database information is possible. A normal microphone will pick up sounds indiscriminately, thereby adding in background noise which is a primary source of confusion.

Although some discrimination of sound can be accomplished by frequency filters, proximity attenuators, and related devices that group sound characteristics as to common features of frequency or volume, total isolation of desired sounds has not generally been accomplished when the speaker is in a nonisolated environment. Although some applications of unidirectional microphones have provided improved isolation, development of such a totally selective microphone system has long been needed and would provide great advantage in countless applications. This is so with any form of telephone system that is hands free so that the microphone is picking up background signal along with the primary speaker's voice. Visor microphones for cellular car phones are just one of a myriad of examples. TV and stage cameramen, as well as other sound technicians who must communicate quietly while recording or producing video and sound works, require constant communication which functions best in an isolated mode. Switchboard operators, pilots, motorcyclists, workers having on-line communication systems in high-noise envirorments--all need a communication system which isolates the voice signal from all extraneous sounds.

U.S. Patent 4,588,867 by Konomi addressed some of these problems and disclosed the possible utility of an ear-mounted microphone for discarding air-borne sound waves in favor of bone conduction of the speaker's voice. Aside from technical problems which may have affected the inability of this device to perform adequately, practical considerations also limit the general acceptance of such ear-mounted microphone systems. For example, the Konomi device places a microphone element deep in the ear canal in order for vibrations to be accessed from the bone. This requirement immediately imposes the high cost of having the canal insert portion sized to the unique configuration of the user's ear canal as with a hearing aid. It also adds the discomfort of having an insert in the ear, creating an unnatural and unacceptable sensation which would undoubtedly preclude universal usage of the device.

As a further problem, the Konomi reference may be subject to audio feedback arising from the close proximity of the microphone element and speaker, where a duplex mode is selected. Konomi attempts to reduce such feedback by insertion of sound absorbing barriers between the microphone and speaker portions of the device. Because a total barrier is virtually impossible to develop, there is always some sound which penetrates, generating some feedback signal. Needless to say, the challenge of an acceptable ear-mounted microphone was not resolved with Konomi.

U.S. Patent 4,930,156 by Norris addressed the problem of audio feedback with its disclosure of an ear microphone/speaker combination; however, the microphone was placed outside the ear and was sensitive to ambient noise. The absence of isolation of the speaker voice gave the device only limited acceptance, despite the fact that it offered some improvement over the prior art.

U.S. Patent 4,009,355 by Poradowski, and U.S. Patents 3,995,124 and 3,922,488 by Gabr represent a line of directional microphones which are generally referred to as unidirectional systems. These microphones typically provide for opposing openings in opposite ends of the microphone casing. This permits sound waves to enter the casing from different orientations with respect to an enclosed speaker element. If the origin of the sound waves is at a substantial distance from the microphone, the arrival of each sound wave at each of the opposing openings is substantially concurrent. Because this sets up two opposing acoustic waves within the speaker casing, the waves cancel and the sound is basically undetected or unregistered at the speaker element.

This technique has been used to reduce ambient noise and provide some speech isolation for phone operators, camera staff, and other isolation communication systems as designated above. Typically, this unidirectional microphone is positioned within a boom or forward extending support arm that places the microphone immediately in front of the speaker's mouth. It's close proximity to the mouth provides a differential response of sound waves at the opposing openings, based on the time difference in arrival of the wave at each opening. As a consequence, the proximate sound waves do not cancel, giving some selectivity to the near speech, as opposed to sound generated at a sufficient distance that the acoustic waves arrive at the respective openings in the speaker casement at the same time.

Nevertheless, there remains a dissatisfaction with the inconvenience of a boom suspended in front of the speaker's face. It imposes an obstacle that interferes with movement of food or drink toward the user's face, as well as providing a limiting factor to movement which might jostle the microphone from its proper position. Cosmetically, it is obviously unpopular. However, because prior art attempts to place the microphone away from the face and toward the ear give rise to feedback problems with the associated speaker positioned at the user's ear, the boom remains the primary means of isolating speech in a microphone system.

Unidirectional microphone systems have been limited to isolated microphone applications because the combination of a microphone with a speaker element has typically resulted in feedback. Control of feedback in duplex mode for a mic/speaker combination has been the subject of continued research for many years. Although it has been generally recognized that the ear is an ideal support location for a duplex mic/speaker, overcoming technical problems such as feed back and sound isolation has presented a formidable challenge.

What is needed therefore is a microphone that more effectively isolates the voice of the speaker from the environment, yet permits use with a speaker in the same housing without feedback. Such a device should permit use at the ear without insertion of physical structure within the ear canal, with attendant fitting expense and discomfort.

### OBJECTS AND SUMMARY OF THE INVENTION

The present invention relates to ear piece devices according to the preamble of claim 1.
Such a device is known from WO 93/23942.

It is an object of the present invention to provide an improved ear-mounted microphone which is capable of isolating the voice of the speaker from all extraneous, background noise.

It is a further object of the present invention to provide an improved ear-mounted microphone which does not require entry of any physical sructure within the ear canal yet still isolates the voice of the speaker from all outside noises.

It is a further object of the present invention to provide an improved ear-mounted microphone which prevents pickup by the microphone of vibrational signals carried within the casing or housing of the ear piece device yet still isolates the voice of the speaker from all outside noises.

These and other objects are realized by the inventive ear piece device having the features of claim 1.

It is a further object of the present invention to provide an improved ear-mounted microphone which includes a speaker in direct proximity with the microphone for enabling duplex operation in a speak and listen mode.

A still further object of the present invention is to provide an improved microphone/speaker device which is mounted at the ear and which enables hands free, duplex communication without feedback.

Another object of the present invention is to provide an improved ear mounted microphone capable of providing audio input to a computer or modem to facilitate voice recognition for direct voice command to computer controls.

Another object of the present invention is to provide an improved microphone/speaker combination which can be interconnected with a telephone system to provide hands free speak and listen capabilities in duplex mode.

Yet another object of this invention is to enable voice pickup via an ear mounted microphone which can be coupled into a telemetry unit for wireless communication with a modem, computer or other receiver device capable of accepting radio frequency signal.

These and other objects are realized in the inventive ear piece device for use in a communication system, as claimed in claim 7.

A method for isolating air-borne ambient sound waves generated within the immediate vicinity from background sound waves by a microphone within a housing is also disclosed and comprises the steps of claim 8.

Other objects and features of the present invention will be apparent to those skilled in the art, taken in combination with the accompanying drawings.

### DESCRIPTION OF THE DRAWINGS

Figure 1 shows a perspective, elevational view of an ear device including a speaker element and microphone element of an example which is useful for understanding the invention.
Figure 2 discloses a cross section of the housing of the device shown in Figure 1, taken along the lines 2-2.
Figure 3 depicts an embodiment of the invention in partially exploded form illustrating a horizontal configuration for the microphone element of the device.
Figure 4 represents an enlarged view of the internal configuration of the microphone compartment.
Figure 5 illustrates the internal configuration of the microphone compartment housing.
Figure 6 is a top plan view of the assembled device of Figure 3.
Figure 7 is a bottom plan view of the same device.
Figure 8 graphically illustrates a sound absorbing gasket with microphone component.
Figure 9 shows the gasket of Figure 8 as a top view.
Figure 10 is a cross-section of the gasket of Figure 8, taken along the lines 10-10.
Figure 11 is a perspective view of the device of Figure 3.
Figure 12 discloses a circuit diagram for use with the subject invention as part of a telephone system that is positioned at the user's ear.
Figure 13 shows a schematic layout of the ear piece device in combination with a telephone circuit.
Figure 14 illustrates the use of the present ear piece device with a telemetry system, enabling isolated voice communication.
Figure 15 graphically illustrates the use of the present ear piece device in combination with a computer and modem, enabling voice recognition and voice command.

### DETAILED DESCRIPTION OF THE INVENTION

### Referring now to the drawings:

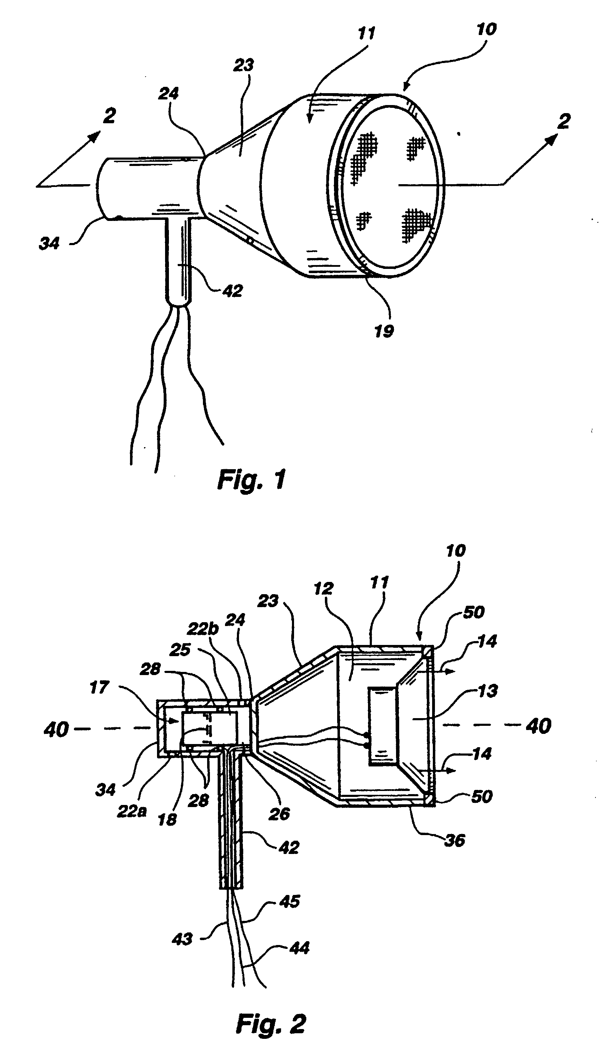

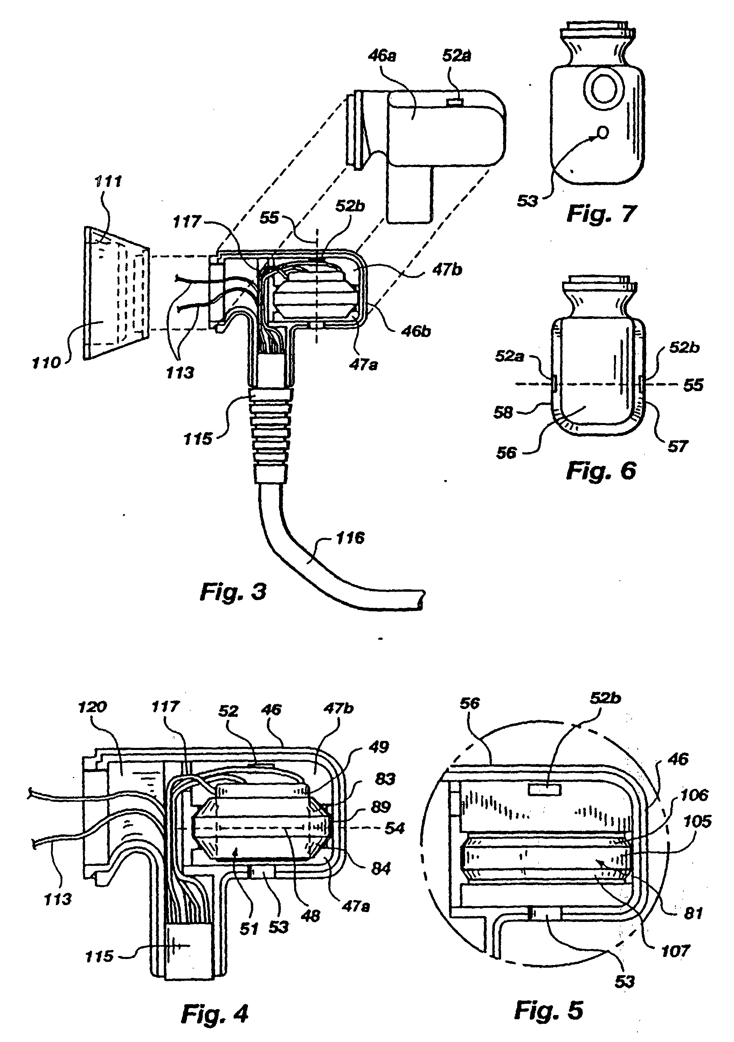

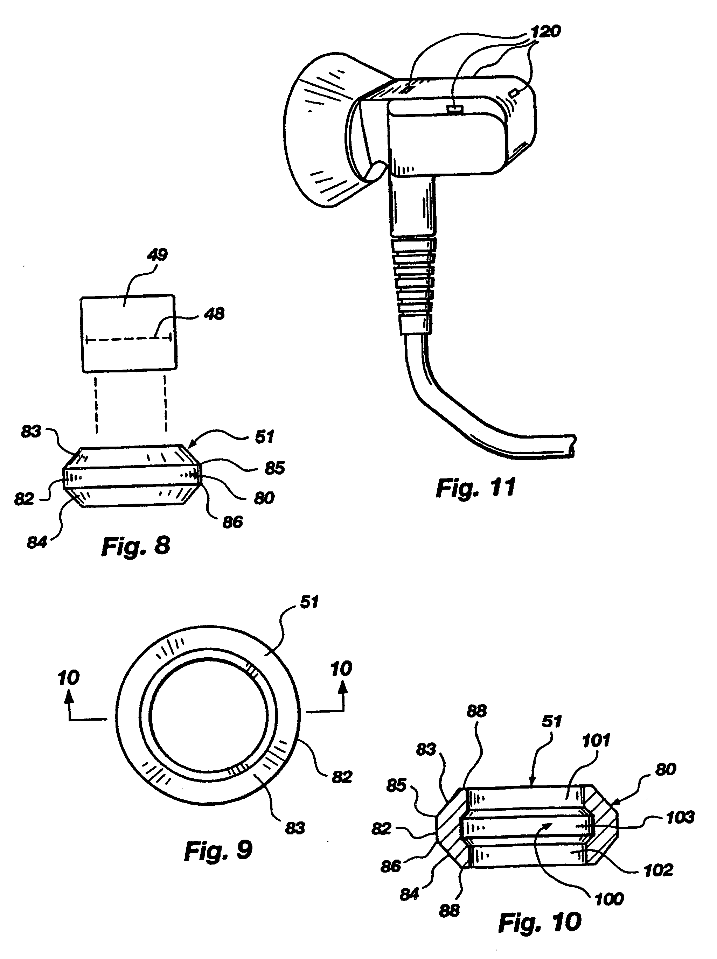

The figures illustrate embodiments of a microphone and speaker device that is positioned at the ear and is supported by the cartilage at the ear according to an example which is useful for understanding the invention (Figures 1 and 2) and according to the invention (Figures 3-11). The microphone element in each instance is designed for localized sensitivity to pickup speech of the wearer, while disregarding more distant sounds associated with background noise. Both embodiments provide a design which substantially neutralizes feedback by acoustically isolating the microphone element from vibrations carried within the casing, as well as cancelling background noise that interferes with detection and transmission of the wearer's voice signal.

A significant common feature of both devices is the technique for preventing pickup by the microphone of vibrational signals carried within the casing or housing of the speaker and microphone. Such vibrations received at the microphone element typically generates feedback, which has been the primary hurdle in developing an ear-supported, duplex device. The present invention utilizes a specially designed support gasket which absorbs most of the energy before it reaches the microphone, in combination with a unique mounting configuration for the microphone within the gasket for cancelling out the remaining signal at the active element or diaphragm of the microphone. The features are illustrated in a vertical configuration in the example of Figure 1 and in a horizontal configuration in the inventive embodiment of Figure 3.

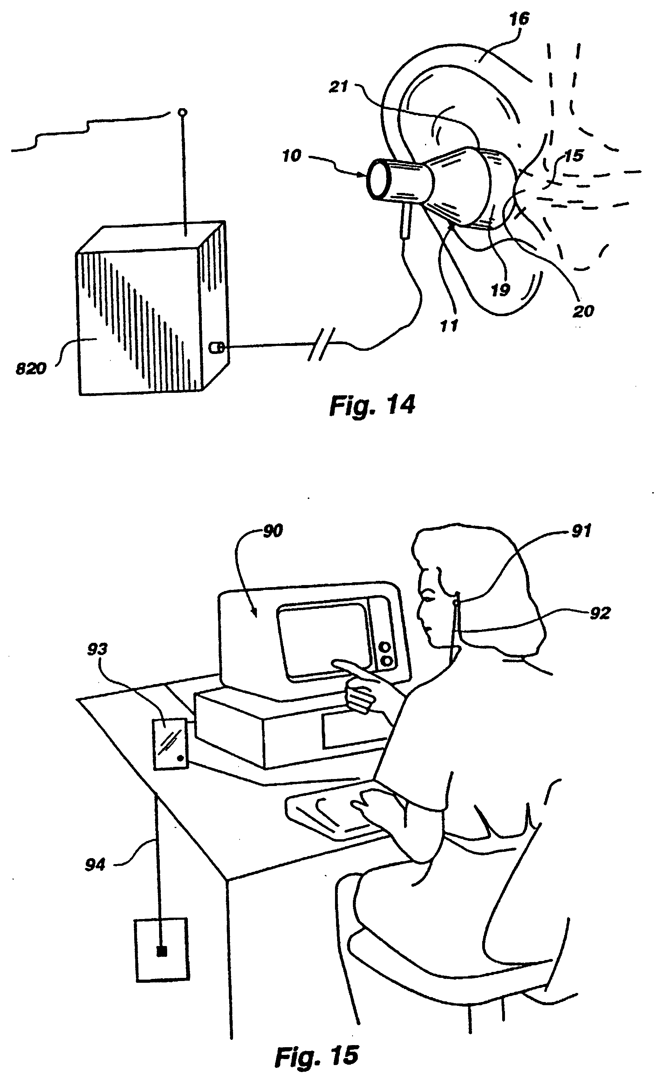

Turning to the example of Figure 1, the ear piece 10 includes a surrounding housing 11 which forms a speaker opening or cavity 12 capable of housing a speaker element 13 with its directional orientation 14 positioned toward the ear canal 15 (Figure 14) when positioned at the user's ear 16. A microphone element 17 contained within the housing 11 primarily detects sound vibrations generated by the user.

The housing 11 is configured at one end 19 to fit snugly at the ear by frictional contact with surrounding ear tissue 20 and 21. It is significant that the housing and its attached structure does not extend into the ear canal 15 and therefore does not impose any discomfort or unique fitting requirements for use of this device. The housing may be constructed of any suitable material such as ABS plastics (TM), and preferably of materials which minimize vibrational transfer between the speaker 13 and microphone 17.

The microphone 17 may be any conventional type such as a carbon, electret, piezo crystal, etc. The embodiment of the example illustrated in Figure 2 is an electret microphone having an aluminized mylar diaphragm and plate 18 positioned with a microphone casement 25. This casement 25 is inserted within the microphone end housing 34 with a unique gasket configuration represented by acoustical mounting rings 28 which mechanically and acoustically isolate vibrations from the housing. Those vibrations which are not absorbed by the gasket and therefore pass through the mounting rings are carried into the microphone casing 25 at approximate equal entry distances from the microphone element 18. Because of this approximate equal distance from each mounting ring 28 to the centrally disposed microphone element 18, vibrations from the housing arrive at the microphone element at approximately the same time, but in opposite phase relationship. Accordingly, the opposing vibrational waves cancel, registering no wave energy or vibration. Accordingly, the microphone element is both mechanically and acoustically isolated by reason of the sound insulation and sound cancellation provided by the interconnecting structure at the microphone casing 25. The exact separation distance can be physically tuned by adjusting the mounting rings along the casing until the maximum cancellation effect is achieved.

Background sound vibrations are canceled by use of at least two opposing openings 22a and 22b which communicate through the housing and casing with the surrounding environment. With respect to sound waves travelling from substantial distances, as compared with the distance of the ear piece from the user's mouth, such waves arrive at the respective openings 22a and 22b at the same time. Acoustical waves are concurrently formed at each opening, and propagate toward the microphone element until they cancel. Accordingly, distant sound transmissions are effectively canceled by super positioning of opposing waves entering through the respective opening 22a and 22b. It will be apparent that multiple openings can be applied in place of a single opening on each side of the microphone element as illustrated in Figure 3, with similar sound cancellation.

It will be noted that a second housing portion 42 is provided and operates as a conduit for exiting wire 43, 44 and 45. Wire 43 represents the exterior portion which extends from the microphone element. Wires 44 and 45 are contacts which couple with the speaker element 13.

To enable duplex operation of both speaker and microphone in the same housing, it is necessary to acoustically isolate the speaker element 13 from the casing. In the present invention and in the example of Figure 2, this is accomplished by tuning the insulation means 50 similar to operation of a band pass filter within radio circuitry. Specifically, the speaker element 13 is mounted to the end housing 36 through a nonvibrational ring 50 which extends around the speaker element and operates to isolate the housing as sound insulation means from the speaker element. This further helps to prevent sound vibration transmission through the housing and into the microphone element, which might otherwise lead to irritating feedback. It has been discovered that Kreton (tm), a soft polymer which can be injection molded to desired gasket shapes, has surprising capabilities to absorb sound. It is presently the preferred composition for the sound absorbing material used in the present embodiments.

This problem becomes significant in duplex operation because of the close proximity of the speaker element 13 and microphone element 17. In such close proximity, vibration associated with the speaker element would normally be transferred into the housing and immediately fed into the microphone element 17. In a duplex telephone system where side tone is present, signal from the microphone element 17 is fed back into the speaker 13 to facilitate the user hearing his own voice as reproduced. Failure to acoustically isolate the speaker results in vibrational energy transferred into the housing which represents the speaker's voice being recirculated in a loop. This results in the common occurrence referred to as feedback.

This insulating ring 50 is comprised of materials such as Kreton which are specifically selected or tuned to a particular frequency range that is substantially below the frequencies that will be passed on to the speaker, thereby isolating the speaker acoustically. Other suitable materials may also be applied to tune the insulation ring 50 to a particular frequency range including silicone. Selection of specific material will depend on the frequency range being detected, being tuned to the specific frequency to absorb its vibrational energy and block its passage from entering the housing 11. Such material can also be applied at the rearward portion 24 of the housing 11 where the respective fine speaker wires 44 and 45 pass through the housing and out the conduit 42. With both the speaker and the attached wiring insulated, the speaker vibrations are isolated and duplex operation is facilitated without feedback.

Figures 3 to 11 illustrate an embodiment of the present invention wherein the microphone is positioned within a housing 46 which includes the microphone compartment 47a and 47b. The active microphone element 48 is suspended in a rigid case 49 which is positioned within a support gasket 51. This support gasket performs a function similar to the rings 28 discussed in connection with the example of Figure 2. In this instance, however, the gasket is a single, injection molded component that performs the desired noise cancellation similar to the cancellation of the rings 28. This is discussed in greater detail hereafter.

The microphone compartment includes at least two openings 52 and 53 in the housing forming sound transmission ports operable to pass ambient sound waves to the microphone element. This "unidirectional" technology has been discussed above. The present embodiment includes at least three openings 52a, 52b and 53 forming sound transmission ports operable to pass ambient sound waves to the microphone element 48. At least two of these openings 52a and 52b are positioned within the top side of the housing above an intermediate plane 54 which is defined by the active element 48. The remaining opening 53 is positioned within the housing at an opposite side of the intermediate plane for enabling cancellation of acoustical waves representing distant background sound as has been previously discussed.

The illustrated embodiment positions the three openings 52a, 52b and 53 within a common plane 55. This favors propagation of a common wave front from both sides of the active element to enhance cancellation of the undesirable background noise. Ideally this common plane includes a central axis of the microphone element so that the strongest aspect of the propagated wavefront from both sides of the intermediate plane arrives at a center portion of the active microphone element 48.

Similarly, it is preferred that the two of the openings 52a and 52b at the top of the housing are positioned at opposing sides and at a common vertical height with respect to the microphone element. This configuration of divided openings appears to further enhance formation of a wavefront which enable more complete cancellation of background sound waves. This split configuration of openings also enables reduces overhead space above the microphone case, as well as providing improved aesthetic appearance to the housing by providing a smooth, continuous top surface 56 (Figure 6).

In order to maintain common amplitude for background noise propagated through the respective openings 52a, 52b and 53, it is preferred to have the total opening size of all openings on one side of the intermediate plane equal to the total opening size of all openings on the opposite side of the intermediate plane. Accordingly, the surface area of the circular opening 53 is approximately equal to the surface area of the two rectangular openings 52a and 52b.

It is possible that changes in geometric shape of the housing will affect the choice of opening configurations as well as quantity. With respect to the present housing and microphone compartment which is configured substantially as a rectangular box, the illustrated arrangement of openings offer surprising improvement over use of opposing single openings as disclosed in the example of Figure 2. In the embodiment of Figure 3, the top side of the box has opposing long edges which are formed as curved or angled side walls connecting the top wall 56 to opposing vertical side walls 57 and 58. It has been discovered that positioning the two openings 52a and 52b in each of the opposing angled side walls enhances the clarity of the desired signal, presumably by cancelling the background signal more effectively.

In addition to filtering out the background signal by utilizing unidirectional microphone techniques implemented by the multiple openings 52a, 52b and 53, effective avoidance of feedback in the present invention requires isolation of the microphone element from mechanical vibrations developed in the housing. This was accomplished in the example of Figure 1 with the support rings 28. The inventive embodiment of Figure 3 is an improved configuration which utilizes a support gasket positioned around and forming a bridge between the housing and the microphone case and contained active element 48.

The support gasket 51 provides a unique configuration and composition which function to absorb or dissipate sound vibrations received from the housing, and then cancel remaining vibrations that are transmitted to the microphone element 48. This configuration includes an outer perimeter 80 configured for intimate contact with the housing inner surface 81. This contact needs to be sufficient to obtain a uniform transmission of housing vibration into the gasket such that wave cancellation occurs at the active element 48.

In the illustrated embodiment, the outer perimeter 80 of the gasket and inner surface 81 of the housing are noncylindrical configurations which seat against each other to secure a fixed position for the gasket within the microphone compartment without need for adhesive material. Avoidance of adhesive between the gasket and housing is important because the adhesive may become rigid or brittle and may not be effective in reducing or absorbing vibrational energy. The use of a noncylindrical configuration for securing the gasket within the housing operates in a tongue-in-groove manner, enabling firm compression of the gasket between opposing sides 46a and 46b of the housing.

The illustrated configuration of contacting surfaces between the housing can be viewed as generally concave and the outer perimeter of the gasket has a generally convex, enabling the gasket to nest in the concave configuration of the housing. The specific noncylindrical contact configuration comprises a central portion 82 which is cylindrical but which is joined to upper 83 and lower 84 portions. These portions of the perimeter form inverted conical configurations which respectively have larger diameters at one edge which form a juncture with top 85 and bottom 86 edges of the cylindrical central portion and smaller diameters at a remaining edge 87 and 88 which extend away from the plane of the cylindrical central portion. Similarly, the inner surface of the housing has the same configuration in mirror image with cylindrical surface 105 and conical surfaces 106 and 107 to form the respective concave and convex contacting surfaces 81 and 80.

These contacting surfaces are illustrated in Figures 3 and 4 in seated position. It will be noted that a small annular cavity or gap 89 is centrally disposed around the outer perimeter of the gasket and between the gasket and the housing to form an insulating cavity ring which divides contact of the gasket with the housing to upper 83 and lower 84 sections. It appears that there may be some advantage to propagate the sound waves through the upper 83 and lower 84 surfaces of the gasket, rather than through the central portion 82. This is not to say that other configurations for the contacting surfaces of the housing and the gasket may not work satisfactorily in accordance with the inventive teachings provided herein.

A key aspect of these inventive teachings includes the provision of an inner perimeter 100 of the gasket which defines two separate circumferential points of contact 101 and 102 at the microphone case. As with the rings 28, these points of contact 101 and 102 are respectively equidistant from and on opposing sides of a plane which includes the active element 48. These points of contact provide transmissive contact of surviving vibrations into the microphone case, where they are then conducted to the active element 48. As a result of the equidistant spacing of these points of contact from the active element, wavefronts arrive concurrently and cancel because they are in opposite phase.

This occurs because the inner perimeter of the gasket includes an annular cavity 103 centrally disposed around the inner perimeter of the gasket and between the gasket and the microphone case. This forms an insulating cavity ring which divides contact of the gasket with the case to upper and lower sections which are respectively equidistant from the plane which includes the active microphone element. Although the upper and lower sections of the inner perimeter of the gasket are shown respectively in circumferentially, continuous contact around the microphone case, it is possible to have discontinuous contact points around the periphery and accomplish some cancellation at the active element. Accordingly other configurations of microphone/gasket interface are envisioned, including a configuration wherein the respective contacting surfaces 80 and 81 are in full contact.

Because the devices shown in the example of Figure 1 and the inventive embodiment of Figure 3 are capable of dissipating and cancelling unwanted sound vibrations arriving from the housing, they are capable of operating with an inserted speaker as part of the device. Accordingly, a speaker cavity 110 is provided with the speaker end 111 of the inventive device of Figure 3. The speaker end is configured to mount at the housing end opposite the microphone compartment 47. Speaker leads 113 are provided to connect the speaker to circuitry which processes the signals to and from the device. These leads exit the housing through a collar 115 and cable shield 116. Similarly, the microphone is connected with the processing circuitry by leads 117. A barrier wall 120 separates the respective microphone 47 and speaker compartments.

The housing is capable of being injection molded in two parts as shown in Figure 3. The gasket 51, microphone and connecting wires are laid in place with the gasket seated in the receiving channel 81 and the two halves are then glued together with the speaker end 111. The microphone element is automatically positioned in proper relationship within the microphone compartment by reason of the configuration of the receiving channel 81. The microphone compartment is divided into two portions of approximately equal volume 47a and 47b. This factor helps to balance the cancellation effect that occurs at the microphone element 48.

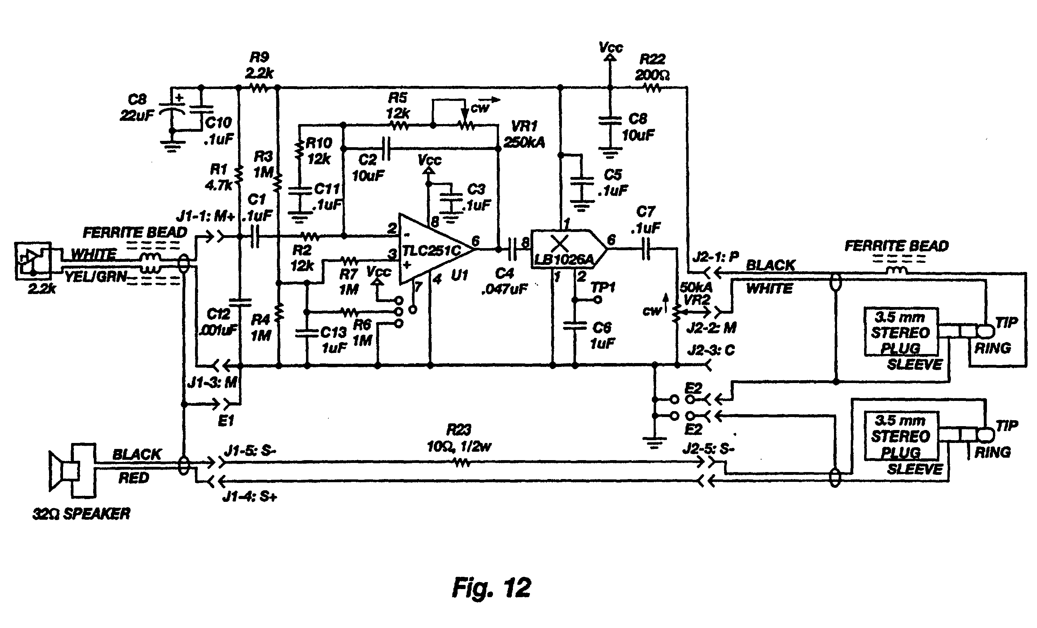

Figure 12 discloses a sample circuit that is effective for processing the microphone and speaker signals as part of a telephone ear piece which is capable of duplex operation. It will be apparent to those skilled in the art that other circuits could be applied with respect to the microphone along, or the combined speaker and microphone combination.

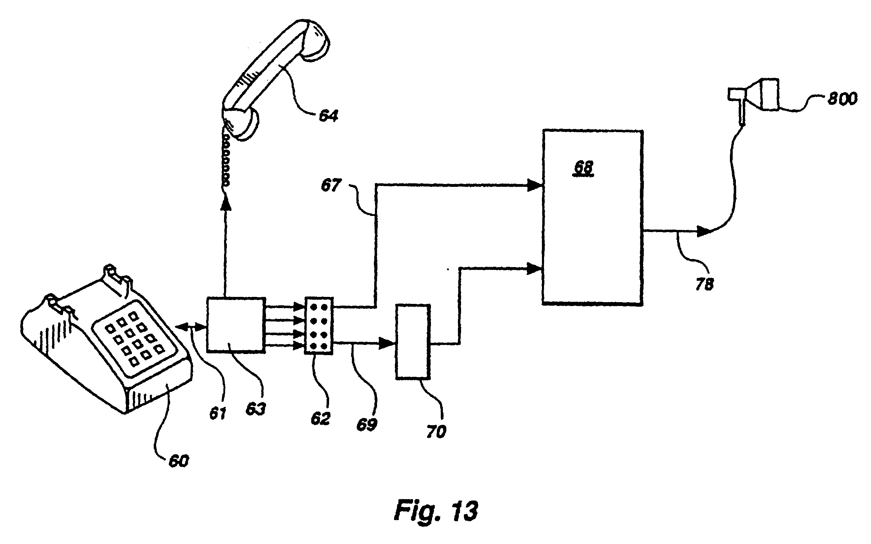

Figure 13 illustrates a basic telephone unit and casement 60 which are coupled into a telephone standard jack for connection to a communication network. The present ear piece device as shown at item 80 provides a microphone and speaker signal which will be processed and transmitted through conventional wirings 61 coupled to the telephone unit 60. Universal coupling configurations to adapt the present system to a standard, four lead telephone wire are disclosed in U.S. Patent 4,930,156 and represented in Figure 13. Additional explanation of this system may be obtained by reference to this U.S. patent.

The present invention can be coupled into this standard phone system by use of a mode switching device 63. This is accomplished by a toggle switch wherein one position transfers the signal directly to the handset 64 as if the control circuitry and ear piece of the present invention were not attached. When switched to a secondary position, the signal is transferred into an interconnect jack 62 which operates as described in the referenced U.S. patent. One output line 67 carries speaker signal and feeds to the primary control circuitry 68 which includes speaker amplifier, mike preamplifier and phasing control. The second output line 69 carries microphone signals through a diode bridge 70 and into the primary control circuitry 68. Both microphone and speaker signals are transmitted along a four wire connection 78 to the ear mounted speaker/microphone combination 800 as disclosed in this application and represented in the example of Figure 1 and the inventive embodiment of Figure 3. It will also be apparent that the interconnect lead 78 could be serviced by a radio frequency transmitter/receiver which could provide a wireless mode to this duplex telephone system. Similarly, the present system can be wired to a belt transmitter 820 as shown in Figure 14. In this system, the ear device with either a microphone or microphone/speaker combination can be wired from the ear to the belt transmitter 820 to facilitate convenient operation without the extra weight of a transmitter unit positioned within the housing 11.

The embodiment represented in Figure 14 is particularly useful with respect to transmission of voice commands to computer systems which are capable of voice recognition. This arises because of the isolated content of the voice reproduction. In a microphone mode, the present device receives sound waves from the user's voice. On the other hand, distant sound waves such are received into the microphone but cancel out as previously explained. Similarly, the rotation of the user's head has no impact upon the quality of voice transmission because relative distance remains the same between the ear and mouth.

In view of this method of isolating the voice of the speaker from the environment, the present ear mounted microphone enables greatly simplified algorithms for implementing voice recognition. In, essence, the voice of the speaker is generally the same and can be used to train the algorithm and computer to reproduce corresponding commands associated with the acoustic vibration sent into the housing 11.

When the present invention was substituted within a conventional voice recognition system which previously yielded confidence levels of 45 to 60 percent, voice recognition was improved to the average of 80 to 90 percent. This remarkable improvement based on use of the present microphone element as disclosed and claimed in this application opens the door to a new era of voice command for computer systems generally.

For example, Figure 15 illustrates the use of voice command with a computer 90 which includes software capable of voice recognition. Voice commands are supplied through the ear microphone 91 of the present invention, which is wired 92 into a control circuit 93 which amplifies and supplies appropriate signal into a computer modem (not shown) at the back of the computer. Voice command is now enabled and the user may directly state the desired action verbally, to which the computer can immediately respond. Additional voice communication is enabled by the user through a coupled phone line 94 which enables concurrent voice communication with third parties.

Based on this system, the user may discuss in conference call various issues arising with respect to preparation of documents or other matters facilitated by computation of a computer system and may immediately give voice command to the computer to implement and perform desired operations. This is all accomplished in "hands-free mode" without concern for environmental noises associated with the operator's station. The system can even be made mobile for intercommunications while the operator moves about an office building where the office building has been configured with a microcell communication system. In this instance, the telemetry system as shown in Figure 14 would be used by the operator, who would move from section to section, communicating directly with common frequencies which tie the various microcells into a single network of communication. In this case, the operator can give verbal commands to computer to take care of certain operations, may communicate directly with other individuals within the microcell and can generally perform multiple duties by mere voice command. In addition, the user can direct a computer to place a phone call to a third party outside the microcell and can establish direct phone line communication with this party via the duplex mode within the ear piece 10. Such a system gives total flexibility to the operator who may be mobile and operating with hands free to accomplish multiple tasks and communicate with multiple parties.

These various benefits and improvements are provided in a method for isolating air-borne ambient sound waves generated within the immediate vicinity from background vibrations by a microphone within a housing, wherein the method comprises the steps of claim 8.

Although preferred embodiments and specific examples have been disclosed, it is to be understood that numerous variations from the illustrated examples may be developed. For example, an embodiment such as shown in Figure 11 could be prepared using three or four holes 120 in the top to increase the directional sensitivity of the microphone. Obviously, the two openings of Figure 3 have primary directional sensitivity along a line connecting the respective openings. By increasing the openings around the top or bottom of the housing and microphone compartment, greater directional sensitivity will develop.

Accordingly, it will be understood to those skilled in the art that the scope of the invention is to be determined only by the following claims and not by the specific examples recited herein.

## Claims

1. An ear piece device configured for being supported at an ear of a user and providing a microphone element which detects only air-borne ambient sound waves generated within the immediate vicinity of the skull of the user, comprising:
a housing (46) which is configured at one end for positioning at the ear canal of the user, said housing (46) including an interior surface defining a microphone compartment (47a, 47b);
a microphone positioned within the microphone compartment (47a, 47b), the microphone comprising a rigid case (49) having an exterior surface, and the rigid case containing an active microphone element (48);
said microphone compartment (47a, 47b) including at least two openings (52, 53) in the housing (46) forming sound transmission ports operable to pass air-borne ambient sound waves to the microphone element (48), said openings (52, 53) being respectively positioned at opposite sides of the microphone element (48) for enabling cancellation of air-borne distant background sound waves which enter the compartment through air transmission from a substantial distance as compared to the near location of the user's skull;
means (115, 116, 117) for coupling signal output from the microphone element (48) to an audio circuit for processing;
**characterized in that**
a support gasket (51) is provided which is relatively adjustable with respect to and positioned around said rigid case (49) and contactably sandwiched between the interior surface of the housing (81) and the exterior surface of the rigid case (49) so as to form a bridge between said rigid case (49) and said housing (46), said gasket (51) having an outer perimeter (80) and an inner perimeter (100);
said outer perimeter (80) being in contact with the interior surface of the housing (46);
said inner perimeter (100) being in contact with the exterior surface of the rigid case (49); wherein
an annular cavity (103) is centrally disposed around the inner perimeter (100) and between the gasket (51) and the rigid case (49) and divides contact of said inner perimeter (100) with the rigid case (49) to an upper and a lower section of circumferential points of contact (101, 102) around the periphery of said rigid case (49), wherein said two sections of circumferential points of contact (101, 102) are respectively common to first and second substantially parallel planes passing through the rigid case (49) and being equidistant from and on opposing sides of a plane which includes the active microphone element, such that mechanical waves passing from the housing (46) into the rigid case (49) have to pass at said two sections of circumferential points of contact (101, 102) between the support gasket (51) and the rigid case (49), which causes them to arrive at the active microphone element (48) at substantially the same time and in opposing phase relationship such that substantially all of said mechanical waves cancel each other.

2. A device as defined in claim 1, wherein the outer perimeter of the gasket (80) and the interior surface of the housing (81) forming the microphone compartment (47a, 47b) are noncylindrical configurations which seat against each other to secure a fixed position for the gasket (51) within the microphone compartment (47a, 47b) without need for adhesive material.

3. A device as defined in claim 2, wherein the noncylindrical configuration of the interior surface of the housing (46) is generally concave and the outer perimeter of the gasket (51) has a generally convex configuration, enabling the gasket (51) to nest in the concave configuration of the housing (46).

4. A device as defined in claim 3, wherein the noncylindrical configurations of the outer perimeter of the gasket (80) and interior surface of the housing (46) each comprise a central portion which is cylindrical and includes first and second opposing ends, and first and second conical portions which respectively have larger diameters at one edge which form junctures with the first and a second opposing ends of the cylindrical central portion (82) and smaller diameters at a remaining edge such that said conical portions extend outwardly from the central cylindrical section in opposing directions so as to taper inwardly from their respective junctions toward a central axis of the central cylindrical portion (82) whereby said remaining edge is positioned inwardly away from the plane of the cylindrical central portion (82) to form the respective concave and convex configurations.

5. A device as defined in claim 3, further including an annular cavity (103) centrally disposed around the outer perimeter (80) of the gasket (51) and between the gasket (51) and the housing (46) to form an insulating cavity ring which divides contact of the gasket (51) with the housing (46) to upper (83) and lower (84) sections.

6. A device as defined in claim 1, wherein the upper and lower sections of the inner perimeter (100) of the gasket (51) are respectfully in circumferentially continuous contact around the rigid case (49).

7. An ear piece device as claimed in claim 1, for use in a communication system, wherein:
said housing (46) has a speaker end (111) and a microphone end, said speaker end (111) being configured for a snug fit at the ear canal of a user, said speaker end (111) and microphone end being divided by an acoustically insulting wall which encloses the microphone end within the housing (46) to form a microphone compartment (47a, 47b) defined by an interior surface of the housing (81); and
further comprising a speaker element mounted with sound projection oriented toward the user's ear canal and including isolation means coupled between the speaker element and the housing (46) for selectively isolating undesirable frequencies that interfere with sensitivity of audio pick up at the microphone end of the housing;

8. A method to detect only air-borne ambient sound waves generated within the immediate vicinity by isolating them from background vibrations, comprising the steps of:
a) positioning a rigid case (49) containing an active microphone element (48) within a microphone compartment (47a, 47b) formed within the housing (46) and defined by an interior surface of the housing (81);
b) forming at least two openings (52, 53) in the housing (46) as sound transmission ports operable to pass the ambient air-borne sound waves to the microphone element (48), said openings (52, 53) being respectively positioned at opposite sides of the microphone element (48) for enabling cancellation the air-borne distant background sound waves which enter the compartment (47a, 47b) through air transmission from a substantial distance as compared to the air-borne ambient sound waves;
c) positioning the rigid case (49) and active microphone element (48) within a support gasket (51) which is relatively adjustable with respect to and positioned around said rigid case (49) and contactably sandwiched between the interior surface of the housing (81) and the exterior surface of the rigid case (49) so as to form a bridge between said rigid case (49) and said housing (46), said gasket (51) having an outer perimeter (80) and an inner perimeter (100), said outer perimeter (80) being in contact with the interior surface of the housing (81), said inner perimeter (100) being in contact with the exterior surface of the rigid case (49); wherein an annular cavity (103) is centrally disposed around the inner perimeter (100) and between the gasket (51) and the rigid case (49) and divides contact of said inner perimeter (100) with the rigid case (49) to an upper and a lower section of circumferential points of contact (101, 102) around the periphery of said rigid case (49), wherein said two sections of circumferential points of contact (101, 102) are respectively common to first and second substantially parallel planes passing through the rigid case (49), and being equidistant from and on opposing side of a plane which includes the active microphone element such that mechanical waves passing from the housing (46) into the rigid case (49) have to pass at said two sections of circumferential points of contact (101, 102) between the support gasket (51) and the rigid case (49), which causes them to arrive at the active microphone element (48) at substantially the same time and in opposing phase relationship such that substantially all of said mechanical waves cancel each other; and
d) coupling signal output from the microphone element to an audio circuit for processing.

## Patentansprüche

1. Ein Ohrstück, das zum Tragen an einem Ohr eines Nutzers ausgebildet ist, und das ein Mikrofonelement bereitstellt, das nur solche aus der Umgebung über die Luft übertragene Schallwellen registriert, die in der unmittelbaren Umgebung des Schädels des Nutzers erzeugt werden, umfassend:
ein Gehäuse (46), das an einem Ende zur Positionierung am Gehörkanal des Nutzers ausgebildet ist, wobei das Gehäuse (46) eine innere Oberfläche aufweist, die ein Mikrofonabteil (47a, 47b) definiert;
ein Mikrofon, das im Mikrofonabteil (47a, 47b) vorgesehen ist und ein starres Gehäuse (49) mit einer äußeren Oberfläche umfasst, wobei das Mikrofon ein aktives Mikrofonelement (48) enthält;
wobei das Mikrofonabteil (47a, 47b) wenigstens zwei Öffnungen (52, 53) im Gehäuse aufweist, die Schalldurchgangsöffnungen darstellen, um über die Luft übertragene Schallwellen aus der Umgebung zum Mikrofonelement (48) passieren zu lassen, wobei die Öffnungen (52, 53) an gegenüberliegenden Seiten des Mikrofonelements (48) vorgesehen sind, um die Auslöschung von aus der weiteren Umgebung über die Luft übertragenen Schallwellen zu ermöglichen, die über Luftübertragung aus einer beträchtlichen Entfernung im Vergleich zur nahen Lage des Schädels des Benutzers gelangen;
eine Einrichtung (115, 116, 117), um ein Ausgangssignal des Mikrofonelements (48) zur Weiterverarbeitung in eine Audioschaltung zu koppeln;
**dadurch gekennzeichnet, dass**
eine Halterungsdichtung (51) vorgesehen ist, die bezüglich des starren Gehäuses (49) justierbar ist und um dieses starre Gehäuse herum vorgesehen ist und berührbar zwischen der inneren Oberfläche des Gehäuses (81) und der äußeren Oberfläche des starren Gehäuses (49) eingebettet ist, um eine Überbrückung zwischen dem starren Gehäuse (49) und dem Gehäuse (46) zu bilden, wobei die Dichtung (51) einen äußeren Umfang (80) und einen inneren Umfang (100) aufweist;
wobei der äußere Umfang (80) in Kontakt mit der inneren Oberfläche des Gehäuses (46) ist;
wobei der innere Umfang (100) in Kontakt mit der äußeren Oberfläche des starren Gehäuses (49) ist;
wobei ein ringförmiger Hohlraum (103) zentral um den inneren Umfang (100) und zwischen der Dichtung (51) und dem starren Gehäuse (49) vorgesehen ist und die Kontaktbereiche zwischen den innerem Umfang (100) und dem starren Gehäuse (49) in einen oberen und einen unteren Abschnitt von peripheren Kontaktpunkten (101, 102) am starren Gehäuse (49) unterteilt, wobei die zwei Abschnitte von peripheren Kontaktpunkten (101, 102) jeweils in im Wesentlichen parallelen ersten und zweiten Ebenen liegen, die durch das starre Gehäuse (49) verlaufen und äquidistant bezüglich und an gegenüberliegenden Seiten einer Ebene liegen, die das aktive Mikrofonelement beinhaltet, so dass mechanische Wellen, die vom Gehäuse (46) in das starre Gehäuse (49) passieren, durch die zwei Abschnitte von peripheren Kontaktpunkten (101, 102) zwischen der Halterungsdichtung (51) und dem starren Gehäuse (49) passieren müssen, was bewirkt, dass sie am aktiven Mikrofonelement (48) im Wesentlichen gleichzeitig und mit entgegengesetzter Phasenbeziehung ankommen, so dass sich im Wesentlichen alle mechanischen Wellen gegenseitig auslöschen.

2. Ein Ohrstück nach Anspruch 1, wobei der äußere Umfang der Dichtung (80) und die innere Oberfläche des Gehäuses (81), die das Mikrofonabteil (47a, 47b) bilden, nichtzylindrische Konfigurationen aufweisen, die aneinander so anliegen, dass sie eine feste Lage der Dichtung (51) innerhalb des Mikrofonabteils (47a, 47b) sicherstellen, ohne dass Klebstoffe erforderlich sind.

3. Ein Ohrstück nach Anspruch 2, wobei die nichtzylindrische Konfiguration der inneren Oberfläche des Gehäuses (46) im Allgemeinen konkav ist und der äußere Umfang der Dichtung (51) eine im Allgemeinen konvexe Konfiguration aufweist, was das Stecken der Dichtung (51) in die konkave Konfiguration des Gehäuses (46) ermöglicht.

4. Ein Ohrstück nach Anspruch 3, wobei die nichtzylindrischen Konfigurationen des äußeren Umfangs der Dichtung (80) und der inneren Oberfläche des Gehäuses (46) jeweils einen mittleren Abschnitt umfassen, der zylindrisch ist und erste und zweite gegenüberliegende Enden beinhaltet, und erste und zweite konische Abschnitte, die jeweils größere Durchmesser an einer Kante aufweisen, die Verbindungen zwischen den ersten und einem zweiten gegenüberliegenden Ende des zylindrischen mittleren Bereiches (82) bilden, und kleinere Durchmesser an einem übrigbleibenden Rand, so dass die konischen Abschnitte sich nach außen vom zylindrischen mittleren Bereich in entgegengesetzte Richtungen erstrecken, um sich nach innen von ihren jeweiligen Verbindungen in Richtung einer zentralen Achse des zentralen zylindrischen Abschnitts (82) zu verjüngen, wobei der verbleibende Rand nach innen und weg von der Ebene des zylindrischen zentralen Abschnitts (82) positioniert ist, um die jeweiligen konkaven und konvexen Ausbildungen zu bilden.

5. Ein Ohrstück nach Anspruch 3, welches außerdem einen ringförmigen Hohlraum (103) aufweist, der zentral um den äußeren Umfang (80) der Dichtung (51) und zwischen der Dichtung (51) und dem Gehäuse (46) vorgesehen ist, um einen isolierenden Ringhohlraum zu bilden, der den Kontaktbereich zwischen der Dichtung (51) und dem Gehäuse (46) in obere (83) und untere (84) Abschnitte unterteilt.

6. Ein Ohrstück nach Anspruch 1, wobei die oberen und unteren Abschnitte des inneren Umfangs (100) der Dichtung (51) jeweils in peripheren kontinuierlichen Kontakt um das starre Gehäuse (46) sind.

7. Ein Ohrstück nach Anspruch 1 zur Verwendung in einem Kommunikationssystem, wobei:
das Gehäuse (46) ein Lautsprecherende (111) und ein Mikrofonende aufweist, wobei das Lautsprecherende (111) so ausgebildet ist, dass es passgenau am Ohrkanal eines Nutzers ansitzt, wobei das Lautsprecherende (111) und das Mikrofonende durch eine akustisch isolierende Wand getrennt sind, die das Mikrofonende innerhalb des Gehäuses (46) umschließt, um ein Mikrofonabteil (47a, 47b) zu bilden, das durch eine innere Oberfläche des Gehäuses (41) definiert wird; und
ferner ein Lautsprecherelement aufweist, das mit einer Schallabstrahlung in Richtung des Gehörkanals des Nutzers angebracht ist und Isoliereinrichtungen aufweist, die zwischen dem Lautsprecherelement und dem Gehäuse (46) gekoppelt sind, um wählbare unerwünschte Frequenzen zu isolieren, die mit der Empfindlichkeit der Audioaufnahme des Mikrofonendes des Gehäuses interferieren können.

8. Ein Verfahren zum Registrieren von ausschließlich über die Luft aus der Umgebung übertragenen Schallwellen, die innerhalb der unmittelbaren Nachbarschaft erzeugt wurden, wobei diese von Hintergrundschwingungen isoliert werden, mit den Schritten:
a) Positionieren eines starren Gehäuses (49), das ein aktives Mikrofonelement (48) enthält, innerhalb eines Mikrofonabteils (47a, 47b), das durch das Gehäuse (46) gebildet wird und durch eine innere Oberfläche des Gehäuses (81) definiert wird;
b) Bilden von wenigstens zwei Öffnungen (52, 53) in dem Gehäuse (46) als Schalldurchgangsöffnungen, um über die Luft übertragene Schallwellen zum Mikrofonelement (48) passieren zu lassen, wobei die Öffnungen (52, 53) jeweils an entgegengesetzten Seiten des Mikrofonelements (48) vorgesehen sind, um die Auslöschung von über die Luft übertragenen Hintergrundschallwellen aus der weiteren Entfernung zu ermöglichen, die das Abteil (47a, 47b) über Luftübertragung aus einer beträchtlichen Distanz, verglichen mit den Schallwellen aus der unmittelbaren Umgebung, erreichen;
c) Positionieren des starren Gehäuses (49) und des aktiven Mikrofonelements (48) innerhalb einer Halterungsdichtung (51), die relativ bezüglich dem starren Gehäuse (49) justierbar ist und um dieses herum positioniert ist und berührbar zwischen der inneren Oberfläche des Gehäuses (81) und der äußeren Oberfläche des starren Gehäuses (49) eingebettet ist, um so eine Brücke zwischen dem starren Gehäuse (49) und dem Gehäuse (46) zu bilden, wobei die Dichtung (51) einen äußeren Umfang (80) und einen inneren Umfang (100) aufweist, wobei der äußere Umfang (80) in Kontakt mit der inneren Oberfläche des Gehäuses (81) steht, wobei der inneren Umfang (100) in Kontakt mit der äußeren Oberfläche des starren Gehäuses (49) ist, wobei ein ringförmiger Hohlraum (103) zentral um den inneren Umfang (100) und zwischen der Dichtung (51) und dem starren Gehäuse (49) vorgesehen ist und den Kontaktbereich zwischen dem inneren Umfang (100) und dem starren Gehäuse (49) in einen unteren und einen oberen Abschnitt von peripheren Kontaktpunkten (101, 102) des starren Gehäuses (49) aufteilt, wobei die zwei Abschnitte von peripheren Kontaktpunkten (101, 102) jeweils in ersten und zweiten im Wesentlichen parallelen Ebenen liegen, die durch das starre Gehäuse (49) verlaufen und äquidistant bezüglich einer Ebene liegen, die das aktive Mikrofonelement beinhaltet, und auf entgegengesetzten Seiten dieser Ebene, so dass mechanische Wellen, die aus dem Gehäuse (46) in das starre Gehäuse (49) gelangen, diese zwei Abschnitte von peripheren Kontaktpunkten (101, 102) zwischen der Halterungsdichtung (51) und dem starren Gehäuse (49) passieren müssen, was bewirkt, dass sie am aktiven Mikrofonelement (48) im Wesentlichen zur gleichen Zeit und in entgegengesetzter Phasenverschiebung angelangen, so dass sich im Wesentlichen alle diese mechanischen Wellen gegenseitig auslöschen; und
d) Koppeln eines Ausgangssignals aus dem Mikrofonelement in eine Audioschaltung zur Weiterverarbeitung.

## Revendications

1. Dispositif d'oreille configuré pour être supporté à une oreille d'un utilisateur et fournissant un élément de microphone qui détecte seulement les ondes sonores ambiantes aériennes générées au voisinage immédiat du crâne de l'utilisateur, comprenant :
un boîtier (46) qui est configuré à une extrémité pour être positionné dans le canal de l'oreille de l'utilisateur, ledit boîtier (46) comprenant une surface intérieure définissant un compartiment de microphone (47a, 47b) ;
un microphone positionné à l'intérieur du compartiment de microphone (47a, 47b), le microphone comprenant un étui rigide (49) ayant une surface extérieure, et l'étui rigide contenant un élément de microphone actif (48) ;
ledit compartiment de microphone (47a, 47b) comprenant au moins deux ouvertures (52, 53) dans le boîtier (46) formant des ports de transmission du son utilisables pour faire passer des ondes sonores ambiantes aériennes à l'élément de microphone (48), lesdites ouvertures (52, 53) étant positionnées respectivement sur des côtés opposés de l'élément de microphone (48) pour permettre l'annulation d'ondes sonores aériennes d'arrière-plan lointain qui entrent dans le compartiment par transmission aérienne depuis une distance importante par comparaison à l'emplacement proche du crâne de l'utilisateur ;
des moyens (115, 116, 117) pour coupler une sortie de signal de l'élément de microphone (48) à un circuit audio pour traitement ;
**caractérisé en ce que**
un joint de support (51) est prévu, lequel est relativement réglable par rapport audit étui rigide (49) et positionné autour de celui-ci et est interposé avec contact entre la surface intérieure du boîtier (81) et la surface extérieure de l'étui rigide (49) de façon à former un pont entre ledit étui rigide (49) et ledit boîtier (46), ledit joint (51) ayant un périmètre externe (80) et un périmètre interne (100) ;
ledit périmètre externe (80) étant en contact avec la surface intérieure du boîtier (46) ;
ledit périmètre interne (100) étant en contact avec la surface extérieure de l'étui rigide (49) ; dans lequel
une cavité annulaire (103) est disposée de façon centrale autour du périmètre interne (100) et entre le joint (51) et l'étui rigide (49) et divise le contact dudit périmètre interne (100) avec l'étui rigide (49) en une section supérieure et une section inférieure de points de contact circonférentiels (101, 102) autour de la périphérie dudit étui rigide (49), dans lequel lesdites deux sections de points de contact circonférentiels (101, 102) sont respectivement communes à des premier et second plans sensiblement parallèles passant à travers l'étui rigide (49) et étant équidistantes et sur des côtés opposés d'un plan qui renferme l'élément de microphone actif, de telle sorte que des ondes mécaniques passant du boîtier (46) dans l'étui rigide (49) doivent passer par lesdites deux sections de points de contact circonférentiels (101, 102) entre le joint de support (51) et l'étui rigide (49), ce qui les fait arriver à l'élément de microphone actif (48) sensiblement en même temps et en relation de phase opposée de telle sorte que pratiquement toutes lesdites ondes mécaniques s'annulent les unes les autres.

2. Dispositif tel que défini dans la revendication 1, dans lequel le périmètre externe du joint (80) et la surface intérieure du boîtier (81) formant le compartiment de microphone (47a, 47b) sont de configurations non cylindriques qui s'appuient l'une sur l'autre pour assurer une position fixe au joint (51) à l'intérieur du compartiment de microphone (47a, 47b) sans la nécessité d'un matériau adhésif.

3. Dispositif tel que défini dans la revendication 2, dans lequel la configuration non cylindrique de la surface intérieure du boîtier (46) est généralement concave et le périmètre externe du joint (51) a une configuration généralement convexe, ce qui permet au joint (51) de s'emboîter dans la configuration concave du boîtier (48).

4. Dispositif tel que défini dans la revendication 3, dans lequel les configurations non cylindriques du périmètre externe du joint (80) et de la surface intérieure du boîtier (46) comprennent chacune une partie centrale qui est cylindrique et qui comprend des première et seconde extrémités opposées, et des première et seconde parties coniques qui présentent respectivement des diamètres plus grands à un bord qui forme jonction avec la première et avec une seconde extrémité opposée de la partie cylindrique centrale (82) et des diamètres plus petits à un bord restant, de telle sorte que lesdites parties coniques s'étendent vers l'extérieur depuis la section cylindrique centrale dans des sens opposés, de façon à s'effiler vers l'intérieur à partir de leurs jonctions respectives en direction d'un axe central de la partie cylindrique centrale (82), ledit bord restant étant positionné vers l'intérieur à l'écart du plan de la partie cylindrique centrale (82) pour former les configurations concave et convexe respectives.

5. Dispositif tel que défini dans la revendication 3, comprenant en outre une cavité annulaire (103) disposée de façon centrale autour du périmètre externe (80) du joint (51) et entre le joint (51) et le boîtier (46) pour former une cavité annulaire isolante qui divise le contact du joint (51) avec le boîtier (46) en des sections supérieure (83) et inférieure (84).

6. Dispositif tel que défini dans la revendication 1, dans lequel les sections supérieure et inférieure du périmètre interne (100) du joint (51) sont respectueusement en contact circonférentiel continu autour de l'étui rigide (49).

7. Dispositif d'oreille selon la revendication 1 pour utilisation dans un système de communication, dans lequel :
ledit boîtier (46) comporte une extrémité de haut-parleur (111) et une extrémité de microphone, ladite extrémité de haut-parleur (111) étant configurée pour s'adapter à frottement doux au canal de l'oreille d'un utilisateur, ladite extrémité de haut-parleur (111) et ladite extrémité de microphone étant divisées par une paroi acoustiquement isolante qui enferme l'extrémité de microphone à l'intérieur du boîtier (46) pour former un compartiment de microphone (47a, 47b) défini par une surface intérieure du boîtier (81) ; et
comprenant en outre un élément de haut-parleur monté avec la projection du son orientée vers le canal de l'oreille de l'utilisateur et comprenant un moyen d'isolation couplé entre l'élément de haut-parleur et le boîtier (46) pour isoler de façon sélective des fréquences indésirables qui interfèrent avec la sensibilité de captage audio au niveau de l'extrémité de microphone du boîtier.

8. Procédé pour détecter seulement des ondes sonores ambiantes aériennes générées au voisinage immédiat en les isolant de vibrations d'arrière-plan, comprenant les étapes consistant à :
a) positionner un étui rigide (49) contenant un élément de microphone actif (48) à l'intérieur d'un compartiment de microphone (47a, 47b) formé à l'intérieur du boîtier (46) et défini par une surface intérieure du boîtier (81) ;
b) former au moins deux ouvertures (52, 53) dans le boîtier (46) en tant que ports de transmission du son pouvant être actionnés pour faire passer les ondes sonores ambiantes aériennes à l'élément de microphone (48), lesdites ouvertures (52, 53) étant positionnées respectivement sur des côtés opposés de l'élément de microphone (48) pour permettre l'annulation d'ondes sonores aériennes d'arrière-plan lointain qui entrent dans le compartiment (47a, 47b) par transmission aérienne depuis une distance importante par comparaison aux ondes sonores ambiantes aériennes ;
c) positionner l'étui rigide (49) et l'élément de microphone actif (48) à l'intérieur d'un joint de support (51) qui est relativement réglable par rapport audit étui rigide (49) et positionné autour de celui-ci et est interposé avec contact entre la surface intérieure du boîtier (81) et la surface extérieure de l'étui rigide (49) de façon à former un pont entre ledit étui rigide (49) et ledit boîtier (46), ledit joint (51) ayant un périmètre externe (80) et un périmètre interne (100), ledit périmètre externe (80) étant en contact avec la surface intérieure du boîtier (81), ledit périmètre interne (100) étant en contact avec la surface extérieure de l'étui rigide (49), dans lequel une cavité annulaire (103) est disposée de façon centrale autour du périmètre interne (100) et entre le joint (51) et l'étui rigide (49) et divise le contact dudit périmètre interne (100) avec l'étui rigide (49) en une section supérieure et une section inférieure de points de contact circonférentiels (101, 102) autour de la périphérie dudit étui rigide (49), dans lequel lesdites deux sections de points de contact circonférentiels (101, 102) sont respectivement communes à des premier et second plans sensiblement parallèles passant à travers l'étui rigide (49) et étant équidistantes et sur des côtés opposés d'un plan qui renferme l'élément de microphone actif, de telle sorte que des ondes mécaniques passant du boîtier (46) dans l'étui rigide (49) doivent passer par lesdites deux sections de points de contact circonférentiels (101, 102) entre le joint de support (51) et l'étui rigide (49), ce qui les fait arriver à l'élément de microphone actif (48) sensiblement en même temps et en relation de phase opposée de telle sorte que pratiquement toutes lesdites ondes mécaniques s'annulent les unes les autres ; et
d) coupler une sortie de signal en provenance de l'élément de microphone à un circuit audio pour traitement.
